# EUROPEAN PATENT APPLICATION

(11) **EP 4 468 681 A1**
(43) Date of publication of application: **27.11.2024**
(21) Application number: 23175567.9
(22) Date of filing: 26.05.2023
(51) Int. Cl.: H04L 51/02

(54) **A COMMUNICATION SYSTEM AND A METHOD OF SAME**

(71) Applicant: Siemens Aktiengesellschaft, 80333 München (DE)
(72) Inventor: Baglan, Sezer, 34742 Kadiköy, Istanbul (TR); Cimenoglu, Erdem, 34800 Beykoz (TR); Dag, Fatih Mehmet, 35390 Karsiyaka/IZMIR (TR); Gonul, Mustafa, 34406 Kagithane (TR); Malkos, Sibel, 34340 Besiktas/Istanbul (TR); Ozer, Dilek, 34841 Maltepe (TR); Ozyildirim, Isa, 34940 Istanbul (TR); Yillikci, Giray, 3450 Uskumrukoy/Sariyer/Istanbul (TR)
(74) Representative: Siemens Patent Attorneys

(57) **Abstract**

The present invention relates to a communication system comprising at least one chatbot frontend being adapted to provide communication with at least one user; at least one chatbot backend being in communication with the chatbot frontend, wherein the chatbot backend is adapted to discover at least one component of an industrial setting which is connected to a network; to collect data from the component, to interpret data collected from the component, to send chatbot frontend information about the interpreted data. The present invention also provides a communication method for the communication system.

## Description

### Technical Field

Present invention relates to a communication system and a method for providing communication between humans and machines in an industrial setting.

### Background of the Invention

Chatbots are software programs that employ natural language processing to engage in conversations with people. Chatbots are utilized across diverse domains. One such instance is within smartphones, where chatbot applications are utilized to receive spoken instructions from users and provide them with relevant information or answers to their queries.

Chatbot applications have also found application in industrial settings. As mentioned in US2018129181A1, these chatbots are employed to interact with and manage industrial machinery. Similar to their usage in smartphone applications, in industrial systems, chatbots receive and analyze verbal commands from users, subsequently providing them with information regarding the outcome of their instructions.

In industrial settings, numerous products and solutions exist that facilitate prompt retrieval of machine information through direct dialogue. These solutions enable the uploading of valuable data and instructions to assist machine operators and maintenance teams.

In certain organizations, machine manufacturers leverage speech assistants to streamline various processes. These include creating a knowledge database, extracting relevant information from the database for the end customer, determining which information is accessible to the customer, utilizing feedback from the speech assistant to learn from customer queries, interacting with machines in innovative ways, and integrating engineering, automation, and servicing information into the machine product life cycle.

One major challenge in the industrial domain is that the majority of chatbot systems lack remote awareness of the current industrial topology and setup. In cases where production errors occur, operators must possess a comprehensive understanding of the problem description and be capable of finding suitable solutions. It becomes crucial for operators to provide the chatbot with detailed information regarding the encountered problem in the field, including specific device-related issues. Proposed chatbots in the industrial domain cannot track the field for more to do point dialogs with the operators and operators cannot query the properties of the problematic devices in the field like their model, MLFB (Maschinen lesbare Fabrikate bezeichnung - Machine Readable Product Designation), service number, etc. verbally. Besides, current chatbot implementations has no features to diagnose the devices and interpret technical issues in a plain text way.

### Object of the Invention

It is an object of the exemplary embodiment of the present invention to provide an efficient communication system and method for providing communication between humans and machines in an industrial setting.

A further object of the present invention is to provide a communication system and method that efficiently enables giving users reliable information about the components of the industrial setting.

### Brief Description of the Invention

The present invention pertains to achieving its objectives by a communication system comprising at least one chatbot frontend being adapted to provide communication with at least one user; at least one chatbot backend being in communication with the chatbot frontend, wherein the chatbot backend is adapted to discover at least one component of an industrial setting which is connected to a network; to collect data from the component, to interpret data collected from the component, to send chatbot frontend information about the interpreted data.

From another aspect, the present invention provides a communication method comprising steps of: discovering, by a chatbot backend, at least one component of an industrial setting which is connected to a network; collecting data from the discovered component by the chatbot backend; interpreting data collected from the component by the chatbot backend; sending information about the interpreted data from the chatbot backend to a chatbot frontend; presenting information, by the chatbot frontend, received from the chatbot backend to at least one user.

According to the present invention, by using a chatbot backend to collect data from the components of an industrial setting, various data can be gathered. By using said data, for example via the artificial intelligence module, information to be presented to a user is able to be generated. Therefore, users are able to be informed about the components of the industrial setting.

### Description of Drawings

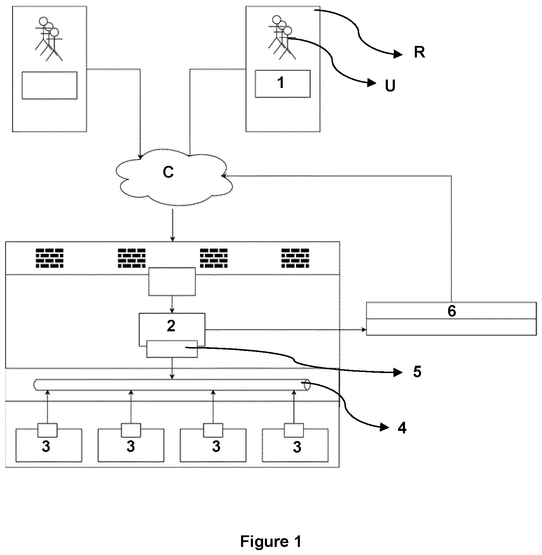

Figure 1 illustrates an exemplary block diagram of the communication system of the present invention.

The reference numbers in the figure signify the following meanings:

| | |
|---|---|
| User | (U) |
| Remote location | (R) |
| Cloud | (C) |
| Chatbot frontend | (1) |
| Chatbot backend | (2) |
| Component | (3) |
| Broker | (4) |
| Interpreter | (5) |
| Artificial intelligence module | (6) |

### Detailed Description of the Invention

The communication system of the present invention is suitable to be used in an industrial setting. The communication system comprises at least one component (3), and at least one chatbot frontend (1) adapted to establish communication with at least one user (U). The communication system of the invention further comprises at least one chatbot backend (2) being in communication with the chatbot frontend (1). The chatbot backend (2) is adapted to discover the least one component (3) of the industrial setting, which is connected to a network. The chatbot backend (2) is further adapted to collect and interpret data from the least one component (3). The chatbot backend (2) is configured to interpret and send the interpreted data to the chatbot frontend (1).

In some exemplary embodiments of the present invention, the chatbot frontend (1) comprises at least one user interface for presenting information to the users (U). The user interface may comprise at least one screen and/or at least one speaker. By utilizing the screen, visual information (such as text) can be presented to the users (U) while the use of the speaker, enables the presentation of audio information (such as speech) to the users (U). In some exemplary embodiments, the user interface may comprise at least one means, such as a microphone and/or a keyboard, for receiving user (U) input. In such an embodiment, the chatbot frontend (1) is adapted to receive at least one input from the user (U) and to send the input to the chatbot backend (2). The chatbot backend (2) is adapted to analyse the input received from chatbot frontend (1), to generate response information, and to send the information to the chatbot frontend (1).

In some exemplary embodiments of the invention, the chatbot backend (2) may comprise at least one broker (4) for collecting data from component (3) of the industrial setting. The broker (4) is adapted to collect events, alarms, and errors from the component (3) as data. The chatbot backend (2) comprises at least one interpreter (5) for interpreting data collected by the broker (4). The chatbot backend (2) further comprises at least one artificial intelligence module (6) for analysing the data interpreted by the interpreter (5) and generate information about the interpreted data. In such an embodiment, the interpreter (5) is configured to analyse events, alarms, and errors collected by the broker (4) and to transform them to information, which can be understood by the artificial intelligence module (6). Accordingly, artificial intelligence module (6) is configured to analyse the data and to generate information to be presented to the user (U).

In some exemplary embodiments of the invention, the communication system comprises at least one cloud (C) for providing data connection between the chatbot frontend (1) and the chatbot backend (2). In such an embodiment, the chatbot frontend (1) and the chatbot backend (2) are connected to the cloud (C) via a network connection (such as the Internet or an intranet). Thus, the chatbot frontend (1) can be used by the users (U) located in a remote location (R), whereas the chatbot backend (2) can located in the industrial setting. The cloud (C) comprises at least one storage device for storing information sent from the chatbot backend (2), allowing to review information sent from the chatbot backend (2) to the chatbot frontend (1) at a later time.

In some exemplary embodiments of the invention, the chatbot backend (2) comprises at least one means for programming a communication interface for the at least one component (3). In an industrial network, not all components (3) may have their own interface for communicating with the chatbot backend (2) directly. Thus, the programming can create a communication interface in order to receive data from a component (3), which does not have its own communicating interface. Thus, it can be possible to utilize the communication system with various components (3).

In some exemplary embodiments of the invention, the communication system is utilized in an industrial setting comprising a plurality of components (3), such as PLCs, drivers, IPCs and other hardware or remote interfaces. In operation, the components (3) can create events, alarms, and errors. These can be monitored via several protocols and techniques like OPC, S7. There might be several dedicated software applications that can be linked with the components (3). The software applications can be in communication with the chatbot backend (2), preferably via the broker (4). Various programming and/or monitoring applications can track and program the components (3) in the field. The chatbot backend (2) can attempt to discover network and to find all components (3) in the field.

There might be several protocols regarding network topology discovery enabled already in the components (3) and these can be used for a step, where the chatbot backend (2) should also discover the interfaces that can be consumed in the following steps. In some components (3), which do not have a proper interface to consume, the chatbot backend (2) may be flexible to program the communication interfaces between the components (3) and the broker (4). With respect to these communication interfaces, the chatbot backend (2) can obtain the necessary alarms, events, and errors. In addition to that, the chatbot backend (2) also can attempt to connect to the components (C) and collect necessary other information from the components (C).

In some embodiments, the users (U) may prefer to prevent direct access of the chatbot frontend (1) to the components (3). In situations involving conflicts, an additional configuration parameter may exist to allow access either from the chatbot frontend (1) or other specified user interfaces for the respective components (3). For instance, if the parameter is off, the chatbot backend (2) will not be able to access the components (3). The data created on the components (3) are transmitted to the broker (4) of the chatbot backend (2). The broker (4) collects the data created by the components (C) in a raw form. The data on the broker (4) is refreshed in a predefined interval time, such as per 1 minute interval, per 5 minutes intervals etc.

In the event that the chatbot backend (2) fails to provide comprehensible information, the users (U) may wish to review the raw data on the chatbot frontend (1). The temporal data, which are kept in the broker (4), is transferred to the interpreter (5) that processes the raw data for the artificial intelligence module (6). The interpreter (5) assures whether the dialog model is compatible with the respected component (C) family. If not, the interpreter (5) requests the processes for retraining the dialog models related with the target components (3). Possible future remedies / alarms / events / actions / warnings can be obtained from the chatbot frontend (1) by the user (U) on demand. For example, if the user (U) asks for the possible problems in a given period of time for target components (3), the chatbot frontend (1) can list the problems or directly raise a notification message, popup window etc. proactively. When the users (U) initiate a dialog with a question like "I would like to solve the problem on the PLC", chatbot frontend (1) can respond with the sentences like "Which PLC, Software Controller or S7-1500" or if there is only one problematic PLC in the field, can response with a sentence like "I assume you mean S7-1500 with service number ... and on this device there is an issue related to the device. Please check the purple PROFIBUS cables on the device." In addition to this conversation, users (U) can create queries like: "Which problems will be encountered in a month possibly?". Chatbot frontend (1) then lists the possible problems in the field to the operator.

By employing the chatbot backend (2) to gather data from various components (3) of an industrial environment, it becomes possible to collect diverse sets of information in line with this approach. By utilizing the data, such as through the implementation of an artificial intelligence module (6), for instance, information to be presented to a user (U) can be generated. Thus, the users (U) can be informed about the components (C) of the industrial setting.

## Claims

1. A communication system suitable to be used in an industrial setting comprising at least one component (3) **characterized by** comprising,
- at least one chatbot frontend (1) adapted to establish communication with at least one user (U);
- at least one chatbot backend (2) being in communication with the chatbot frontend (1), wherein the chatbot backend (2) is adapted to discover at least one component (3) of the industrial setting which is connected to a network, to collect data from the component (3), to interpret data collected from the component (3), and to send chatbot frontend (1) information about the interpreted data.

2. Communication system according to claim 1, **characterized in that** the chatbot frontend (1) comprises at least one user interface for presenting information to the users (U).

3. Communication system according to claim 2, **characterized in that** the at least one user interface comprises at least one screen and/or at least one speaker.

4. Communication system according to claims 2 or 3, **characterized in that** the at least one user interface comprises at least one means for receiving user (U) input.

5. Communication system according to claim 4, **characterized in that** the chatbot frontend (1) is adapted to receive at least one input from the user (U) and send the input to the chatbot backend (2).

6. Communication system according to claim 5, **characterized in that** the chatbot backend (2) is adapted to analyse the input received from the chatbot frontend (1), to prepare response information, and to send said information to the chatbot frontend (1).

7. Communication system according to any one of the preceding claims, **characterized in that** the chatbot backend (2) comprises at least one broker (4) for collecting data from the component (3) of the industrial setting.

8. Communication system according to claim 7, **characterized in that** the chatbot backend (2) comprises at least one interpreter (5) for interpreting data collected by the broker (4).

9. Communication system according to claim 8, **characterized in that** the chatbot backend (2) comprises at least one artificial intelligence module (6) for analysing the data interpreted by the interpreter (5) and generating information about the interpreted data.

10. Communication system according to any one of the preceding claims **characterized by** comprising at -least one cloud (C) for providing data connection between the chatbot frontend (1) and the chatbot backend (2).

11. Communication system according to claim 10, **characterized in that** the cloud (C) comprises at least one storage device for storing information sent from the chatbot backend (2).

12. Communication system according to any one of the preceding claims **characterized in that** the chatbot backend (2) comprises at least one means for programming a communication interface for the at least one component (3).

13. A communication method suitable to be used with a communication system comprising at least one chatbot frontend (1) and at least one chatbot backend (2), in an industrial setting, comprising at least one component (3) **characterized by** comprising the steps of:
- discovering, by the chatbot backend (2), at least one component (3) of the industrial setting which is connected to a network;
- collecting data from the discovered component (3), by the chatbot backend (2);
- interpreting the data collected from the component (3), by the chatbot backend (2);
- sending information about the interpreted data from the chatbot backend (2) to the chatbot frontend (1);
- presenting information, by the chatbot frontend (1), received from the chatbot backend (2) to at least one user (U).

14. Communication method according to claim 13, **characterized by** comprising the steps of: receiving at least one input from the at least one user (U) by the chatbot frontend (1); sending the input to the chatbot backend (2); analysing the input, by chatbot backend (2), and preparing response information to the input; sending the response information from the chatbot backend (2) to the chatbot frontend (1); presenting the response information to the user (U) by the chatbot frontend (1).
